(19) Europäisches Patentamt
European Patent Office
Office européen des brevets

(11) Publication number: **0 159 704**
**B1**

(12) # EUROPEAN PATENT SPECIFICATION

(45) Date of publication of patent specification: **18.01.89**

(51) Int. Cl.$^4$: **C 08 G 69/42,** C 08 G 69/16, C 08 G 69/40, C 08 G 69/44, C 08 G 77/42

(21) Application number: **85104971.8**

(22) Date of filing: **14.06.82**

(60) Publication number of the earlier application in accordance with Art. 76 EPC: **0 067 694**

(54) **Process for the preparation of molded nylon block polymers.**

(30) Priority: **16.06.81 US 274131**
**16.06.81 US 274330**
**16.06.81 US 274331**
**04.05.82 US 374851**
**04.05.82 US 374852**
**04.05.82 US 374853**

(43) Date of publication of application:
**30.10.85 Bulletin 85/44**

(45) Publication of the grant of the patent:
**18.01.89 Bulletin 89/03**

(84) Designated Contracting States:
**AT BE CH DE FR GB IT LI LU NL SE**

(56) References cited:
**DE-B-2 030 030**
**US-A-4 031 164**

(73) Proprietor: **DSM RIM NYLON V.O.F**
**Karveelweg 3**
**NL-6222 NJ Maastricht (NL)**

(72) Inventor: **Gabbert, James Delvin**
**1041 Wappapello Lane**
**St. Louis Missouri 63141 (US)**
Inventor: **Garner, Albert Young**
**812 Wild Hickory Lane**
**Manchester Missouri 63011 (US)**
Inventor: **Hedrick, Ross Melvin**
**300 Chasselle Lane**
**St. Louis Missouri 63141 (US)**

(74) Representative: **Hoogstraten, Willem Cornelis Roeland et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 159 704 B1

Courier Press, Leamington Spa, England.

## Description

This invention relates to the preparation of molded nylon block polymers.

### Description of the prior art

Polymers containing polyamide segments and segments of another material have been disclosed in the art and are herein referred to as "nylon block polymers". A combination of polyamide segments and segments of another polymeric material allows for the obtaining of block polymers with unique combinations of properties. The properties can be varied by varying the polyamide and/or other polymeric segments in the block polymer. Such block polymers have been found particularly suitable for use as fibers, fabrics, films and molding resins.

In U.S. Patent 4,031,164, issued June 21, 1977 and 4,223,112, issued September 16, 1980, both to Hedrick and Gabbert, there are taught nylon block polymers containing nylon segments derived from lactam monomers and other polymeric blocks derived from polyols. Polyacyl lactams provide linkages for blocks in the nylon block polymers taught in Hedric and Gabbert. Molded articles having a unique combination of properties can be made from the nylon block polmers taught therein.

It is taught in the aforementioned Hedrick and Gabbert patents that the preparation of the block polymers taught therein involves mixing together lactam monomer, polyol, lactam polymerization catalyst and the polyacyl lactam.

US Patent 4,031,164 also discloses the possibility to prereact the polyol and the polyacyllactam. The process described in above-referred to Hedrick and Gabbert patents for making nylon block copolymers typically results in the formation of some polyamide homolog due to the polyacyl lactams which are acyllactam containing materials, as hereinafter defined, reacting solely with lactam monomer. It is preferable to minimize any homolog since it generally causes detrimental effects such as the reduction of molding impact properties of the nylon block copolymer. The catalytic process for imide-alcohol condensation taught by Hedrick and Gabbert in USP Re 30,371, reissued August 12, 1980, can be employed in the preparation of the Hedrick and Gabbert nylon block polymers. It should be noted that by this process the reaction paths shown in Columns 3 and 4 of U.S.P. No. 2,682,526 issued June 29, 1954, to Flory occur, thus resulting in the preparation of multiple acyllactam functional material species (hereinafter defined). Furthermore, reacting a polyol and polyacyl lactam in accordance with this process results in a mixture containing residual catalyst that should be removed or inactivated to reduce the potential difficulties in any subsequent preparation of nylon block copolymer moldings from said mixture.

In U.S. Patent 3,657,385, issued April 18, 1972 to Matzner et al, there are disclosed block polymers prepared from lactam monomer and polyarylene polyethers by anionically polymerizing the lactam monomer with a catalyst-initiator system which comprises, as the initiator or activator, one or more of certain polyarylene polyethers. The particular polyarylene polyether initiators disclosed as useful have terminal groups selected from various specified groups.

Alternative methods for the preparation of nylon block polymers, for example, of the type taught in the aforementioned Hedrick and Gabbert patents, would be of interest to those skilled in the art and are an object of the present invention. Another object of this invention is to provide new materials useful as intermediates in the preparation of nylon block polymers. These and other objects will become apparent from the following detailed description of the present invention.

### Summary of the invention

In accordance with the present invention, there is provided a process for preparing a molded nylon block polymer which comprises bringing into reactive admixture a lactam monomer, a basic lactam polymerization catalyst and a composition containing a lactam functional material selected from those of the formula:

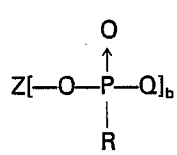

wherein

Q is 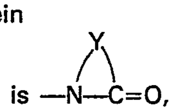, with Y equal to $C_3$—$C_{11}$ alkylene;
b is an integer equal to 2 or more;
R is an alkyl, aryl, aralkyl, alkyloxy, aryloxy, aralkyloxy or Q group;
Z is a segment of:
(1) a polyether, provided said polyether is not solely polyarylene polyether;
(2) a polyester containing polyether or polymeric hydrocarbon segments;
(3) a hydrocarbon;

(4) a polysiloxane; or

(5) mixtures thereof, and

(B) allowing the admixture to polymerize in a mold.

Detailed description of the invention

The lactam functional materials used in the process of the present invention are described in our European Patent Application No. 8230 3063.0 (Publication No. EP—A—0067694). They can be made by the method described in that application, which comprises reacting a lactam monomer containing 4 to 12 carbon atoms with an acid halide material of the formula

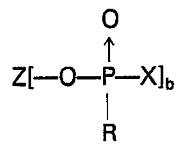

I

wherein X is halogen and b, R and Z are as defined above with R being possibly halogen (instead of Q). The acid halide material and its production are described in our European Patent Application No. EP—A—0067694 derived from Application No. 8230 3063.0.

When producing the acid halide material of Formula I, the equivalents of acid halide groups in the reaction mixture should be maintained in excess of the hydroxyl groups. In this reaction the acid halide material attaches to the hydroxyl sites in the hydroxyl-containing material through ester linkages. By-product hydrogen halide results from the hydrogen and halogen which are displaced. An example of this reaction can be depicted as follows:

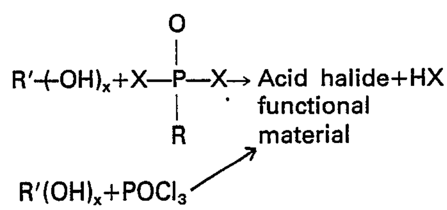

or

II

In the above reaction $R'\!\leftarrow\!OH)_x$ is a material containing two or more hydroxyl groups, i.e. x is at least 2, preferably 2 to 4. This material can be a diol, triol or a material having higher hydroxyl content. The R' group in the hydroxyl-containing material can be a hydrocarbon (preferably having a molecular weight of at least 100), a polyether provided the polyether is not solely polyarylene polyether or a polysiloxane group. R is as defined above.

As will be explained, R' can be equivalent to or become incorporated in a Z segment.

It is to be understood that, unless otherwise stated, reference herein to "molecular weight" for polymers or polymeric segments means number average molecular weight which can be determined by methods well known in the art, e.g. gel phase chromatography.

Reference herein to "polysiloxane" group or segment herein means a group or segment containing at least 50 percent by weight of one or more

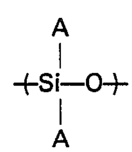

(a siloxane unit) repeat units. In this structure for siloxane units A can be methyl or phenyl. Polysiloxane groups or segments would typically have present other groups, for example ether groups with residues of lower alkyls such as ethane, such groups typically being terminating groups on a chain of repeating siloxane units. These other groups may comprise up to 50 weight percent of the polysiloxane group, preferably less than 30 weight percent.

Preferred R' groups are hydrocarbon and polyether groups. Exemplary hydrocarbon groups are alkylene in the case of diols such as ethylene glycol and polymeric hydrocarbons such as a segment of polybutadiene which can be functionalized to contain two or more hydroxyl groups. A polyoxypropylene segment which can be functionalized to contain two or more hydroxyl groups is an example of a polyether group.

Exemplary hydroxyl-containing materials useful in the above depicted reaction are ethylene glycol, propylene glycol, poly(oxybutylene) glycol, poly(oxyethylene) glycol, poly(oxypropylene) diol, poly(oxypropylene) triol, poly(oxypropylene) tetrol, polybutadiene diol, hydroxyl-functionalized polydimethylsiloxanes and combinations thereof, for example, block polymers of poly(oxypropylene) and poly(oxyethylene) functionalized with two or more hydroxyl groups.

The acid halide material in the above-depicted reaction is a phosphorus-containing acid halide of the structures

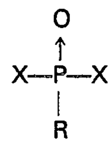

or $POCl_3$, with X as defined hereinbefore, and R being an alkyl, aryl, aralkyl, halogen, alkyloxy, aryloxy or aralkyloxy group.

Exemplary acid halides which may be employed in the above reaction are phosphorus oxychloride, alkyl-, aryl-, and aralkylphosphorodichloridates, alkyl-, aryl- and aralkylphosphonodichlorides.

It is to be understood that numbers designating the amount of functional groups on materials described herein (e.g. the numbers x and b above) would be integers for a single molecule of the material. However, many of such materials, particularly polymeric materials, generally exist in mixtures or compositions containing species having varying amounts of functionality, some species possibly having an amount higher or lower than desired. For such mixtures or compositions, a number designating the amount of functional groups would represent an average of the different species and thus would not necessarily be an integer.

Essentially all of the hydroxyl groups in the hydroxyl-containing starting material are converted in the above described reaction. By providing the acid halide groups in excess of the hydroxyl groups the resulting reaction product is functionalized with acid halide groups.

The above reaction is preferably carried out in the presence of a non-interfering solvent, e.g. cyclohexane, toluene, tetrahydrofuran, or acetone to facilitate removal of the hydrogen halide which is generated. It is also possible for the reaction to proceed without the presence of a solvent with the hydrogen halide being driven off with heat, vacuum, nitrogen sweeping or the like. When a solvent is employed in the reaction, a basic material which acts as an acid scavenger to produce a by-product which is insoluble in the solvent may be employed as a convenient means for removing the hydrogen halide. Well-known acid scavengers such as tertiary amines may be employed. The above reaction can be carried out under essentially ambient conditions and will proceed even more rapidly at higher temperatures, e.g. 30° to 150°C. Precise temperature for the reaction may depend upon the solvent employed. If a solvent is employed it can be removed after the reaction by distillation.

The above-described procedure results in reaction between a hydroxyl-group of the hydroxyl-containing material and an acid halide group of the acid halide material. The following acid halide functionalized materials can thus be prepared:

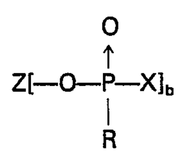

wherein,

Z, R, X and b are as defined hereinbefore.

The Z segment in the above Formula I is a segment of (1) a polyester; (2) a polyether provided said polyether is not solely polyarylene polyether; (3) a hydrocarbon; or (4) a polysiloxane with certain provisos recited hereinbefore. The Z segment for the reaction product depicted by Formula I can be the same as R'-group of a hydroxyl-functional material employed in the reaction described hereinbefore. Alternatively, the Z segment can be a segment containing two or more residues of the starting hydroxyl-containing material linked together with a residue(s) of the starting acid halide material.

It is to be understood that in connection with the description of Z segments or R' groups herein, reference to polymeric segments/groups embraces oligomeric segments/groups unless a specific usage precludes such interpretation. It is also to be understood that these segments/groups may be linear, branched or even star structures.

A Z segment which is a segment of a polyester could be derived from the reaction of an acid halide having di- or multihalide functionality with a hydroxyl-containing material, the groups in the hydroxyl-containing material being linked together by the acid halide through polyester linkages. Exemplary hydroxyl-containing starting materials which may be employed in such a reaction are ethylene glycol, propylene glycol, polycaprolactone diol and polyol, and polybutadiene diol. Acid halides such as those exemplified hereinbefore may be employed. Those skilled in the art would recognize a wide variety of polyester segments which may represent Z in the above Formulae.

It should be understood that a Z segment which is a segment of a polyester would in fact contain smaller segments which fall within the other categories of possible Z segments, for example, hydrocarbon or polyether segments. As an example, a Z segment which is a segment of a polyester can be derived from a hydroxyl-containing material containing a polyether group and an acid halide material whereby two or more of the polyether groups become linked together by the acid halide material through ester linkages. The hydroxyl-containing material may be derived from a diol, triol or polyol. A specific example of such would be the reaction product of poly(oxypropylene) triol and terephthaloyl chloride wherein a residue of the terephthaloyl chloride provides a linkage between two units derived from the triol. Such polyester Z segments could be more specifically described as poly(etherester) segments which are a preferred type of polyester segment within the scope of the teachings herein.

Similarly, other preferred polyester Z segments are those which are the reaction product of a diol or triol which contains polymeric hydocarbon units with an acid halide material whereby two or more of the polymeric hydrocarbon units become linked together by the acid halide material. An example of such is the reaction product of a polybutadiene diol with terephthaloyl chloride wherein two or more polybutadiene segments are linked together by the terephthaloyl chloride through ester linkages.

Polyester segments which may represent Z can vary widedly in size but generally have molecular weights of at least 500. Preferred molecular weights for these segments are from about 1,000 to about 25,000. Preferred types of polyesters which contain polyether or polymeric hydrocarbon segments generally contain these segments at molecular weights of from about 500 to about 4,000.

Furthermore, as will be discussed below, the properties of a nylon block copolymer prepared from an acid halide functionalized material wherein the Z segment is a polyester contains polyether segments having a minimum molecular weight of about 2,000.

A segment of a polyether is a preferred Z segment in the present invention. Such can be derived from a hydroxyl-containing material which contains a polyether segment. Such hydroxyl-containing materials which are preferred include poly(oxyethylene) glycol; poly(oxybutylene) glycol; poly(oxypropylene) diol, triol, and tetrol; and block polymers of poly(oxypropylene) and poly(oxyethylene) functionalized with two or more hydroxyl groups.

The Z polyether segments generally have a molecular weight of at least 500, preferably at least 1,000, and more preferably at least about 2,000. Preferred molecular weights are from about 1,000 to about 25,000, more preferred 2,000—25,000. Even more preferred are molecular weights from about 2,000 to about 4,000 for diol derivatives, from about 3,000 to about 12,000 for triol derivatives and from about 4,000 to about 16,000 for tetrol derivatives.

It has been determined, as will be further discussed below, that the properties of a nylon block copolymer prepared from an acid halide functionalized material wherein the Z segment is a polyether can be significantly influenced by the molecular weight of the segment and that certain preferred molecular weights result in unexpected beneficial results.

It has further been determined that a minimal amount of cross-linking in the prepared nylon block copolymer, which occurs when the average functionality of a composition of acid halide functional materials is greater than two, also results in unexpectedly improved properties. These features will be discussed and exemplified more fully below.

A Z segment which is a segment of a hydrocarbon can be derived from a hydroxyl-containing material which contains a hydrocarbon segment. The size of the hydrocarbon group can vary widely in size from alkylene groups of low molecular weight to polymeric hydrocarbons of substantially higher molecular weight. If Z is a low molecular weight hydrocarbon the acid halide-functional materials of formula I could be employed to join nylon blocks together as described hereinafter. The resulting linkage would introduce the low molecular weight hydrocarbon as an additional block in the resulting nylon block polymer. Examples of low molecular weight hydrocarbon (Z) segments would be the $C_2$ to $C_7$ alkylenes.

Preferred Z segments in the present invention are segments of polymeric hydrocarbons. By "polymeric hydrocarbon segment" herein is meant a hydrocarbon segment of molecular weight of at least about 100 and containing two or more repeat units. Exemplary hydroxyl-containing materials which are segments of a polymeric hydrocarbon are alkylene ($C_8$ and above) glycols and polybutadiene diols, triols, tetrols and even higher polyols. Segments which are polymeric hydrocarbons preferably have a molecular weight of at least 500, even more preferably from about 1,000 to about 25,000. Most preferred are molecular weights from about 1,000 to about 4,000 for diol derivatives, from about 3,000 to about 12,000 for triol derivatives, and from about 4,000 to about 16,000 for tetrol derivatives.

The Z segment may also be a segment of a polysiloxane, such being defined hereinbefore. Such a Z segment could be derived from a hydroxyl-containing material having a polysiloxane segment. Exemplary hydroxyl-containing materials of this type are polydimethylsiloxanes containing two or more hydroxyl functional groups. Polysiloxane segments would generally have a molecular weight of at least 500, preferably at least 1,000. More preferably the molecular weight of such segments would be from about 1,000 to about 25,000.

It should be recognized that the Z segment in the above Formulae may contain a combination of the just described polyester, polyether, hydrocarbon and polysiloxane segments. As discussed hereinbefore preferred polyester segments contain polyether or polyhydrocarbon segments. Also as discussed hereinbefore, polysiloxane segments as defined herein typically contain groups other than siloxane units. It

is recognized that other combination of polyester, polyether, hydrocarbon and polysiloxane segments are possible, and such are contemplated equivalents for use as Z segments in the present invention.

In the above Formulae, X is a halogen, preferably chlorine or bromine, most preferably chlorine. The integer b is at least 2, preferably 2 to 20, most preferably 2 to about 4. R in the Formulae is an alkyl, aryl, aralkyl, alkyloxy, aryloxy, or aralkyloxy group.

The lactam functional materials taught herein are reacted with a lactam monomer to form a nylon block polymer. Thus the acid halide functional materials depicted in the Formulae above can be reacted with a lactam monomer containing from about 4 to about 12 carbon atoms, to produce the following lactam functional materials:

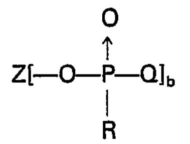 III

wherein,

Q is 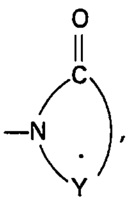,

with $Y=C_3—C_{11}$ alkylene; and b, R, and Z are as defined above for Formula I with R also possibly being Q.

The reaction of said halide functional materials with lactam monomer to prepare the acyllactam functional materials of Formula III would typically be carried out in the presence of a solvent, e.g. cyclohexane, toluene, acetone or excess lactam monomer, and an acid scavenger to facilitate the removal of hydrogen halide generated in the reaction. The reaction may also be carried out without the presence of a solvent. The previous discussion regarding the use of solvent and reaction conditions in connection with the reaction of hydroxyl-containing material with acid halide functional material equally applies here. In an alternative method the acyllactam functional materials can be prepared under similar conditions from a reaction mixture containing a hydroxyl-containing material, an acid halide functional material and lactam monomer, without ever isolating the intermediate acid halide functional material (Formula I) which is formed. A quantitative reaction is preferred to displace essentially all of the halogens in the acid halide of Formulae I with lactam groups.

The lactam functional polymer of Formula III above can then be reacted with additional lactam monomer to prepare a nylon block polymer. Additional hydroxyl-containing material may be included in the reaction mixture but the acyllactam groups should be present in excess of the hydroxyl groups in the mixture. The hydroxyl-containing material will become incorporated in the nylon block polymer. The materials should be intimately mixed. Antioxidant is generally included in the reaction mix. This reaction is generally carried out in the presence of a suitable basic catalyst for the anionic polymerization of lactam, preferably caprolactam magnesium bromide or chloride. A small amount of catalyst may be effective, e.g. a fraction of one mole percent of the lactam monomer to be polymerized, but higher amounts, e.g. from 1 to 20 mole percent, or higher, based on the lactam monomer may be employed. The lactam monomers generally contain 4 to about 12 carbon atoms, preferably 6 to about 12. Caprolactam (which herein means ε-caprolactam) is particularly preferred. Corresponding residues of such preferred lactam monomers are preferred for Q in Formula III. In relatively short reaction times, e.g., less than 10 minutes or even less than 30 seconds, and under moderate conditions, e.g. from about 70°C to about 250°C, preferably about 120°C to about 170°C, the formation of a nylon block polymer results. The lactam can polymerize at the acyllactam sites and also be inserted at ester and amide sites. Nylon block polymers disclosed in the aforementioned Hedrick and Gabbert patents can thus be prepared. The fast reaction time to form the nylon block polymers makes the materials disclosed herein particularly useful in reaction injection molding applications, with other related applications, such as in-mold coating of substrates, rotation molding, resin transfer molding, and pultrusion molding also contemplated.

The relative amounts of lactam monomer and acyllactam functional polymer employed in the preparation of nylon block polymer by the process described above can vary widely depending upon the nylon block polymer desired. The lactam monomer and lactam functional polymer can be present in proportions ranging up to 99 parts by weight of either component to 1 part by weight of the other. Preferred amounts are from about 60 about 90 percent by weight lactam monomer and from about 10 to about 40 percent by weight acyllactam functional polymer. However, from about 40 to about 70 percent by weight lactam functional polymer can be employed to make elastomeric block polymers. Under typical reaction conditions the polymerization is essentially quantitative, i.e. essentially all of the lactam and acyllactam functional polymer is incorporated in the nylon block polymer.

In the preparation of nylon block polymers it may be desirable to conduct the polymerization reaction

in the presence of one or more other materials conventionally incorporated in nylon block polymers. Such materials would include fillers, plasticizers, flame retardants, stabilizers, fibrous reinforcing agents such as asbestos and glass fiber, dyes and pigmenting materials. Such materials may be introduced in the materials of Formulae I or III, taught herein, or otherwise.

The following examples will illustrate the present invention in greater detail. These examples are for illustrative purposes only and are not to be construed as limiting the scope of the invention which would include various other modifications. Unless otherwise indicated herein, all parts, percentages, ratios and the like are by weight.

Example 1

A. Preparation of acid halide functional material

A solution containing 0.03 mole of Niax 11—34 which is an ethylene oxide capped poly(oxypropylene) triol (Molec. Wt. 4,800) in 77 mls. of cyclohexane was dried by removing 27 mls. of the water azeotrope during a half-hour reflux. ("Niax" is a Trade Mark). The polyol solution was cooled to 50°C, 0.09 mole of phenylphosphonyl chloride was added with stirring. A solution of 0.03 mole of dry triethylamine in 20 mls. of cyclohexane was added over a period of 10 minutes. The temperature rose from 47.5°C to 49°C. The resulting creamy slurry was stirred and heated at reflux for a half-hour to complete formation of the acid halide functional polymer.

B. Preparation of lactam functional material

The reaction mixture from A. above was cooled to 42°C and 0.091 mole of solid caprolactam were added with stirring. A solution of 0.185 mole of triethylamine in 20 mls. of cyclohexane was added over a period of seven minutes. The temperature rose 42°C to 53°C. An additional 60 mls. of cyclohexane were added, and the mixture was heated at reflux with stirring for a half-hour. Cooling to 11°C and filtration through "Celite" left a clear, colorless filtrate. Removal of the solvent at 80°C under vacuum for three hours yielded a clear, yellow syrup. The acidity of the resulting acyllactam functional polymeric material was 0.028 meq./gm.

Example 2

Example 1 was repeated except that 0.09 mole of phosphorus oxychloride was substituted for the phenylphosphonyl chloride, the amount of Niax 11—34 being as before. In Step B, the amount of caprolactam was 0.182 mole and the amount of triethylamine was 0.272 mole.

Examples 3 and 4

Preparation of nylon block polymers

Nylon block polyers were prepared from acyllactam functional polymers prepared in Examples 1 and 2 by a hand casting polymerization method.

In a 500 ml. flask equipped with stirrer, thermocouple and nitrogen inlet were charged caprolactam and a prepolymer which was a lactam-functional polymer prepared in accordance with one of Examples 1 and 2. The specific prepolymer example and the amount of materials employed in each of Examples 3 and 4 is shown in Table I. In each case 1.5 grams of Flectol®H (an antioxidant sold by Monsanto Company which is polymerized 1,2 - dihydro - 2,2,4 - trimethylquinoline) was added to the charge. The mixture was heated under vacuum to distill 25 mls. caprolactam and then cooled to 75°C.

Separately prepared was a catalyst solution which was a solution of bromomagnesium caprolactam in caprolactam. The catalyst solution was generally prepared by adding a solution of 3 molar ethyl magnesium bromide in diethyl ether to dry caprolactam followed by thorough degassing under vacuum. Catalyst solutions of various molarities were prepared. For example, a 0.5 molar bromomagnesium caprolactam catalyst solution was prepared by adding 17 mls. of 3 molar ethyl magnesium bromide in diethyl ether to 100 grams of dry caprolactam with degassing as stated above. The molarity of the catalyst solution employed for specific examples is indicated in Table I.

To the above prepared polymer solution was injected a specified amount of catalyst solution under vacuum. The specific amount of catalyst solution employed is also shown in the Table I. After stirring vigorously for fifty seconds the vacuum was released to nitrogen and the catalyzed mixture was poured into a Teflon-lined mold heated to 130°C. After 5 to 15 minutes in the mold the resulting solid nylon block polymer was removed. The polymerization of the prepolymer and caprolactam was essentially quantitative in the formation of the nylon block polymer. Specimens were cut for testing.

TABLE I

| Example | Prepolymer example | Amounts—Grams | | Catalyst | |
|---|---|---|---|---|---|
| | | Prepolymer | Caprolactam | Molarity | Amt., mls. |
| 3 | 1 | 57 | 148 | 0.6 | 70 |
| 4 | 2 | 59 | 149 | 0.6 | 67 |

The nylon block polymers prepared either by hand casting or reaction injection molding in Examples 3—4 were tested for various properties substantially in accordance with the following procedures:

Tensile strength: ASTM D1708 [units are pounds per square inch (psi) or megapascals (MPa)].

Tear Strength: ASTM D1004 [units are pounds-force per linear inch (pli) or newtons per meter (N/m)].

Flexural Modulus: ASTM D790 [units are pounds per square inch (psi) or megapascals (MPa)].

Notched Izod Impact: ASTM D256 [units are foot-pounds per inch notch (ft.lbs./in.) or joules per meter (J/m)].

Test results are provided in Table II. Tensile elongation (to break) determined in accordance with ASTM D 1708 for these nylon block polymers was generally greater than 50% and in some cases greater than 200%.

TABLE II

| Polymer example | Tensile strength | | Tear strength | | Flexural modulus | | Izod impact | |
|---|---|---|---|---|---|---|---|---|
| | psi | (MPa) | pli | (N/m×$10^{-3}$) | psi×$10^{-3}$ | (MPa) | ft.lbs./in. | (J/m) |
| 3 | 5990 | (41.3) | 1430 | (250) | 211 | (1455) | 1.8 | (96) |
| 4 | 6100 | (42.0) | 1360 | (238) | 223 | (1538) | 1.8 | (96) |

**Claims**

1. A process for preparing a molded nylon block copolymer, which comprises (A) bringing into reactive admixture a lactam monomer, a basic lactam polymerization catalyst and a composition containing a lactam functional material selected from those of the formula:

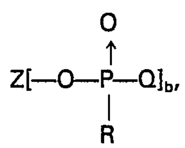

wherein:

Q is 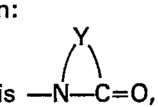, with Y equal to $C_3$—$C_{11}$ alkylene;

b is an integer equal to 2 or more;

R is an alkyl, aryl, aralkyl, alkyloxy, aryloxy, aralkyloxy or Q group;

Z is a segment of:

(1) a polyether, provided said polyether is not solely polyarylene polyether;

(2) a polyester containing polyether or polymeric hydrocarbon segments;

(3) a hydrocarbon;

(4) a polysiloxane; or

(5) mixtures thereof, and

(B) allowing the admixture to polymerize in a mold.

2. A process of either Claim 1, wherein Z is a segment of:

(1) a polyether having a minimum molecular weight of about 2,000; or

(2) a polyester containing polyether segments, the polyether segments having a minimum molecular weight of about 2,000.

3. A process of any of Claims 1 to 2, wherein Z is a segment of:

(1) a polyether derived from a triol, or

(2) a polyester containing polyether segments, the polyether segments being derived from a triol.

4. A process of Claim 3 wherein the polyether in (1) or polyether segments in (2) have a minimum molecular weight of about 3,000.

5. A process of any of Claims 1 to 2, wherein Z is a segment of:

(1) a polyether derived from a tetrol, or

(2) a polyester containing a polyether segment, the polyether segment being derived from a tetrol.

6. A process of Claim 5, wherein the polyether in (1) or polyether segments in (2) have a minimum molecular weight of about 4,000.

7. A process of any of Claims 1 to 6, wherein the average value of b for all the lactam functional materials in said composition is greater than two.

8. A process of any of Claims 1 to 7, wherein Z comprises a segment of poly(oxyethylene), of poly(oxybutylene), of poly(oxypropylene), or of a block copolymer of poly(oxypropylene) and poly-(oxyethylene).

9. A process of any of Claims 1 to 2, wherein b is from two to four.

10. A process of any of Claims 1 to 9, wherein Q is a residue of caprolactam.

11. A process of any of Claims 1 to 10, wherein the basic lactam polymerization catalyst is provided in an effective amount to result in essential completion in less than ten minutes of polymerization of the lactam monomer and lactam functional material to form the nylon block polymer.

12. A process of any of Claims 1 to 11, that is carried out at a temperature of from 70°C to 250°C.

13. A process of Claim 12, that is carried out at a temperature of from 120°C to 170°C.

14. A process of any of Claims 1 to 13, wherein the catalyst is caprolactam magnesium bromide or chloride.

**Patentansprüche**

1. Verfahren zur Herstellung eines geformten Nylonblockcopolymers welches umfaßt, daß man (A) ein Lactammonomer, einen basischen Lactampolymerisationskatalysator und eine Zusammensetzung enthaltend ein funktionelles Lactammaterial ausgewählt aus jenen der Formel

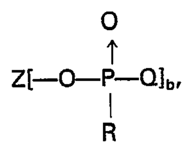

enthält,

worin 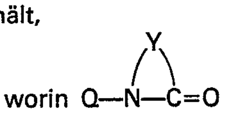 ist, wobei Y $C_3$—$C_{11}$-Alkylen bedeutet,

b eine ganze Zahl von 2 oder mehr ist,

R eine Alkyl-, Aryl-, Aralkyl-, Alkyloxy-, Aryloxy-, Aralkyloxy- oder Q-Gruppe bedeutet, und

Z ein Segment von

(1) einem Polyäther, vorausgesetzt, daß der genannte Polyäther nicht ausschließlich Polyarylenpolyäther ist,

(2) einem Polyäther- oder polymere Kohlenwasserstoffsegmente enthaltenden Polyester,

(3) einem Kohlenwasserstoff,

(4) einem Polysiloxan oder

(5) Mischungen hievon ist,

in reaktive Mischung bringt und (B) die Mischung in einer Form polymerisieren läßt.

2. Verfahren nach Anspruch 1, worin Z ein Segment von

(1) einem Polyäther mit einem Mindestmolekulargewicht von etwa 2000 oder

(2) einem Polyäthersegmente enthaltenden Polyester, wobei die Polyäthersegmente ein Mindestmolekulargewicht von etwa 2000 aufweisen, ist.

3. Verfahren nach Anspruch 1 oder 2, worin Z ein Segment von

(1) einem von einem Triol stammenden Polyäther oder

(2) einem Polyäthersegmente enthaltenden Polyester, wobei die Polyäthersegmente von einem Triol stammen ist.

4. Verfahren nach Anspruch 3, worin der Polyäther in (1) oder die Polyäthersegmente in (2) ein Mindestmolekulargewicht von etwa 3000 aufweisen.

5. Verfahren nach Anspruch 1 oder 2, worin Z ein Segment von

(1) einem von einem Tetrol stammenden Polyäther oder

(2) einem ein Polyäthersegment, das von einem Tetrol stammt, enthaltenden Polyester ist.

6. Verfahren nach Anspruch 5, worin der Polyäther in (1) oder die Polyäthersegmente in (2) ein Mindestmolekulargewicht von etwa 4000 aufweisen.

7. Verfahren nach einem der Ansprüche 1 bis 6, worin der Mittelwert von b für alle funktionellen Lactammaterialien in der genannten Zusammensetzung größer als 2 ist.

8. Verfahren nach einem der Ansprüche 1 bis 7, worin Z ein Segment von Poly(oxyäthylen), von Poly(oxybutylen), von Poly(oxypropylen) oder einem Blockcopolymer von Poly(oxypropylen) und Poly-(oxyäthylen) umfaßt.

9. Verfahren nach Anspruch 1 oder 2, worin b 2 bis 4 ist.

10. Verfahren nach einem der Ansprüche 1 bis 9, worin Q ein Rest von Caprolactam ist.

11. Verfahren nach einem der Ansprüche 1 bis 10, worin der basische Lactampolymerisationskatalysator in einem wirksamen Anteil vorgesehen wird, daß er in weniger als 10 Minuten in der wesentlichen Beendigung der. Polymerisation des Lactammonomers und des funktionellen Lactammaterials unter Bildung des Nylonblockpolymers resultiert.

12. Verfahren nach einem der Ansprüche 1 bis 11, das bei einer Temperatur von 70 bis 250°C durchgeführt wird.

13. Verfahren nach Anspruch 12, das bei einer Temperatur von 120 bis 170°C durchgeführt wird.

14. Verfahren nach einem der Ansprüche 1 bis 13, worin der Katalysator Caprolactammagnesiumbromid oder -chlorid ist.

**Revendications**

1. Procédé de préparation d'un copolymère séquencé de nylon moulé, qui comprend (A) le fait d'amener sous forme d'un mélange réactif un lactame monomère, un catalyseur basique de polymérisation des lactames et une composition contenant une matière à fonctionnalité lactame choisie parmi celles répondant à la formule:

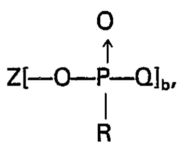

dans laquelle

Q est 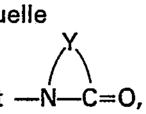, où Y est un groupe alkylène en $C_3$—$C_{11}$;

b est un entier égal à 2 ou davantage;

R est un groupe alkyle, aryle, aralkyle, alkyloxy, aryloxy, aralkyloxy ou Q;

Z est un segment:

(1) d'un polyéther, pourvu que ce polyéther no soit pas seulement un polyarylène éther;

(2) d'un polyester contenant des segments polyéther ou hydrocarbure polymère;

(3) d'un hydrocarbure;

(4) d'un polysiloxane; ou

(5) de mélanges de ceux-ci.

(B) le fait de faire polymériser le mélange dans un moule.

2. Procédé suivant la revendication 1, dans lequel Z est un segment:

(1) d'un polyéther ayant une masse moléculaire minima d'environ 2 000; ou

(2) d'un polyester contenant des segments polyéther, les segments polyéther ayant une masse moléculaire minima d'environ 2 000.

3. Procédé suivant l'une des revendications 1 ou 2, dans lequel Z est un segment:

(1) d'un polyéther obtenu à partir d'un triol; ou

(2) d'un polyester contenant des segments polyéther, les segments polyéther étant obtenus à partir d'un triol.

4. Procédé de la revendication 3, dans lequel le polyéther de (1) ou les segments de polyéther de (2) ont une masse moléculaire minima d'environ 3 000.

5. Procédé suivant l'une quelconque des revendications 1 ou 2, dans lequel Z est un segment:

(1) d'un polyéther obtenu à partir d'un tétrol; ou

(2) d'un polyester contenant un segment polyéther obtenu à partir d'un tètrol.

6. Procédé suivant la revendication 5, dans lequel le polyéther de (1) ou les segments polyéther de (2) ont une masse moléculaire minima d'environ 4 000.

7. Procédé suivant l'une quelconque des revendications 1 à 6, dans lequel la valeur moyenne de b pour toutes les matières à fonctionnalité lactame de cette composition est supérieure à 2.

8. Procédé suivant l'une quelconque des revendications 1 à 7, dans lequel Z comprend un segment de poly(oxyéthylène), de poly(oxybutylène), de poly(oxypropylène), ou d'un copolymère séquencé de poly(oxypropylène) et de poly(oxyéthylène).

9. Procédé suivant l'une quelconque des revendications 1 ou 2, dans lequel b est de 2 à 4.

10. Procédé suivant l'une quelconque des revendications 1 à 9, dans lequel Q est un radical de caprolactame.

11. Procédé suivant l'une quelconque des revendications 1 à 10, dans lequel le catalyseur basique de polymérisation des lactames est apporté dans une quantité efficace pour conduire à une terminaison en moins de 10 minutes de la polymérisation du lactame monomère et de la matière à fonctionnalité lactame pour former le polymère séquencé de nylon.

12. Procédé selon l'une quelconque des revendications 1 à 11, qui est effectué à une température de 70°C à 250°C.

13. Procédé de la revendication 12, qui est effectué à une température de 120°C à 170°C.

14. Procédé selon l'une quelconque des revendications 1 à 13, dans lequel le catalyseur est un bromure ou un chlorure de caprolactame magnésium.